(19) Europäisches Patentamt / European Patent Office / Office européen des brevets

(11) **EP 3 439 940 B1**

(12) **EUROPEAN PATENT SPECIFICATION**

(45) Date of publication and mention
of the grant of the patent:
**18.11.2020  Bulletin 2020/47**

(21) Application number: **17724628.7**

(22) Date of filing: **04.04.2017**

(51) Int Cl.:
**B61L 25/02** *(2006.01)*          **B60L 3/10** *(2006.01)*
**B61L 3/00** *(2006.01)*

(86) International application number:
**PCT/IB2017/051902**

(87) International publication number:
**WO 2017/175119 (12.10.2017 Gazette 2017/41)**

(54) **METHOD FOR CALCULATING THE ADVANCE SPEED OF A RAILWAY VEHICLE**

VERFAHREN ZUR BERECHNUNG DER VORRÜCKGESCHWINDIGKEIT EINES SCHIENENFAHRZEUGS

PROCÉDÉ DE CALCUL DE LA VITESSE D'AVANCEMENT D'UN VÉHICULE FERROVIAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2016  IT UA20162297**

(43) Date of publication of application:
**13.02.2019  Bulletin 2019/07**

(73) Proprietor: **Faiveley Transport Italia S.p.A.**
**10045 Piossasco (TO) (IT)**

(72) Inventor: **TIONE, Roberto**
**10020 Lauriano (Torino) (IT)**

(74) Representative: **Deambrogi, Edgardo et al**
**Jacobacci & Partners S.p.A.**
**Corso Emilia 8**
**10152 Torino (IT)**

(56) References cited:
**EP-A2- 0 218 839     US-A1- 2014 074 328**

**Description**

The present invention relates to a process for improving the computation of the advance speed of a railway vehicle, when all the axles of the vehicle are in the slipping phase due to degraded conditions of adhesion on the rails.

The most precise knowledge of the advance speed of a railway vehicle is of particular importance for example for driving control systems, such as anti-skid systems, and for odometrical references installed on board.

A known method for accurately determining the speed of a railway vehicle is to maintain a "dead" axle, not subjected to traction or braking torques, so that the measurement of its speed is the best reproduction of the actual speed of said vehicle. This solution is particularly effective in the case of particularly low adhesion between the wheels and the rail, when, during traction or braking, all the wheels may enter into a slipping condition and therefore not be in a position to provide correct information regarding the actual speed of the vehicle. In this case, a "dead" axle not subjected to traction or braking torques could continue to be a reliable indicator of the vehicle speed.

The modern architectures of railway vehicles, especially in the case of subway vehicles, tend to have very limited compositions, e.g. they are made up of only two carriages. In such a case, maintaining a "dead" axle could lead to a significant loss of the train's traction and braking capacity.

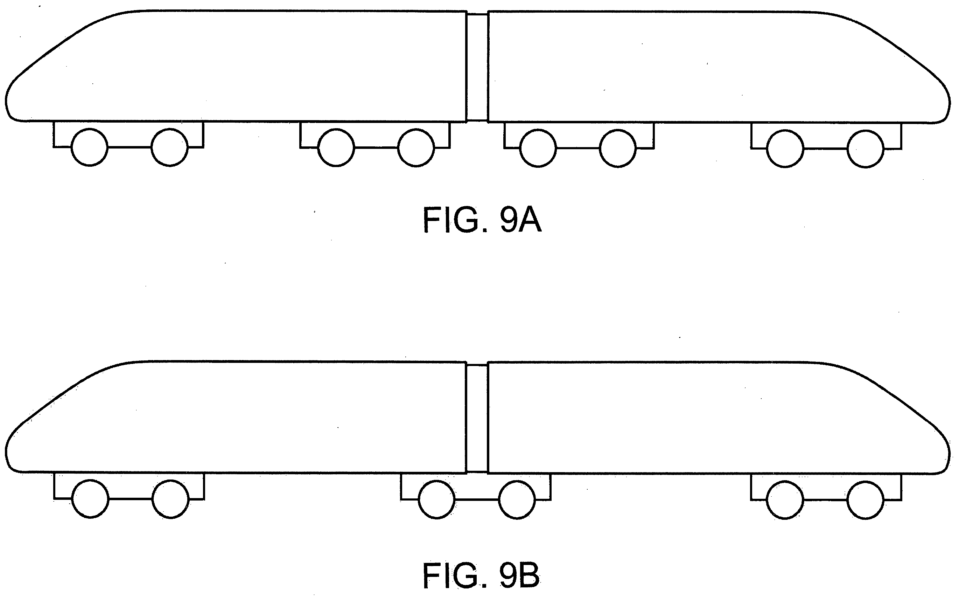

Figure 9A of the accompanying drawings shows a composition with two independent cars, and figure 9B shows a composition with two cars secured through a Jacobs bogie: it is evident how the use of a "dead" axle reduces the traction and braking capacity by 12.5% in the first case and by 16.7% in the second case.

EP 0218839 A2 discloses a method for calculating or estimating the speed of a railway vehicle, at least one axle of which has an associated control system of the adhesion of the wheels to the rails.

An object of the present invention is therefore to propose a new method that allows one to fully recover the use of the "dead" axle for the purposes of traction and braking, even in the case of particularly reduced adhesion, thereby increasing the traction and braking capacity of the train, while permitting said axle to accurately track the speed of the train for a precise assessment of the advance speed.

The description of the present invention refers to the specific case of braking implemented by means of an anti-slip system. Those skilled in the art may however easily deduce a way to implement the present invention through an independent system. Also, those skilled in the art may deduce the dual application, relating to the case of traction, to which the subsequent claims of the present application refer.

The object defined above is achieved according to the invention with a method the salient features whereof are defined in the appended claim 1.

Further features and advantages of the invention will become apparent from the following detailed description, provided purely by way of non-limiting example with reference to the accompanying drawings, in which:

-    figure 1 is a block diagram of an anti-skid control system of the wheels of a railway vehicle;
-    figure 2 is a block diagram of a closed loop control system of an axle's rotation speed;
-    figure 3 is a graph showing qualitatively the trend of the adhesion coefficient $\mu$ of the wheels of an axle, shown on the y-axis, as a function of the slip $\delta$, shown on the x-axis;
-    figure 4 is a diagram illustrating the forces applied to an axle's wheel;
-    figures 5A and 5B are graphs used to illustrating in detail the control criterion to which the present invention refers, figure 5B showing in enlarged scale a part of the graph of figure 5A;
-    figures 6, 7 and 8 are block diagrams relating to different systems for the implementation of the method according to the present invention, and
-    figure 9A, already described, is a train with two independent cars, and figure 9B, likewise already described, is a train with two cars bound with a Jacobs bogie.

Electronic systems are installed on board most modern rail vehicles, which typically include wheel slide control subsystems, intended to intervene both when the vehicle is in the traction phase and when it is in the braking phase. These subsystems are known as anti-skid or anti-slide systems, or also WSP (Wheel Slide Protection) systems.

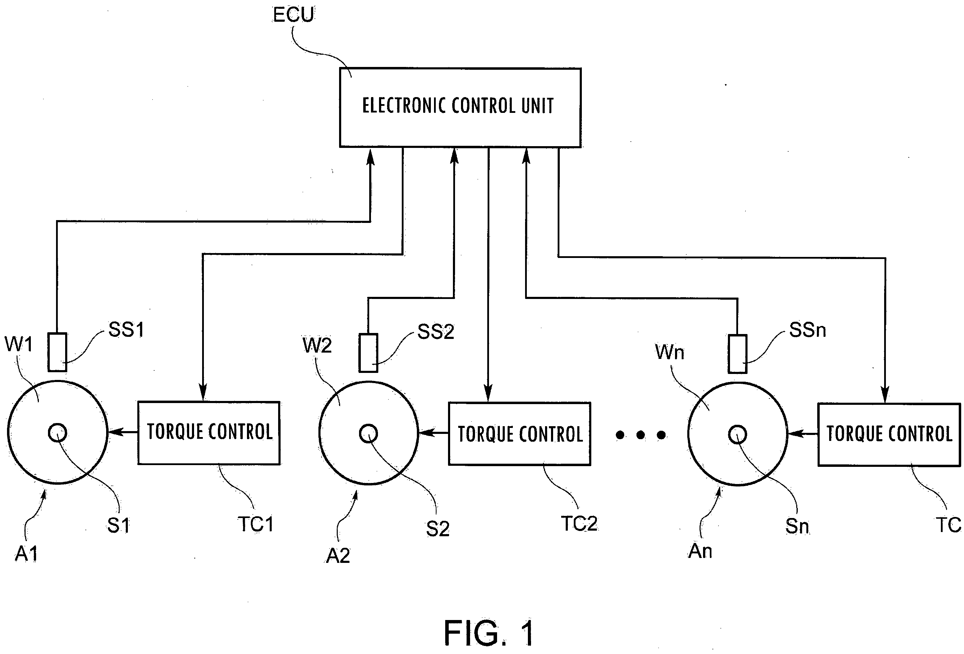

A system for controlling the adhesion of the wheels, as an anti-skid function, according to the prior art, is schematically represented in figure 1 of the accompanying drawings, which refers to a vehicle with n controlled axles A1, A2, ..., An. The axles A1, A2, ..., An comprise a respective shaft S1, S2, ..., Sn and a respective wheelset W1, W2, ..., Wn integral in rotation to it.

In the drawings, only one wheel of each axle is generally illustrated.

The WSP system of figure 1 comprises an electronic control unit ECU, typically based on microprocessor architecture, that receives tachometer signals relating to the angular speed of each axle A1, A2, ...An from sensors SS1, SS2, ... , SSn respectively associated to these axles. The electronic control unit ECU is also connected to the torque control apparatuses TC1, TC2, ..., TCn, each associated to a respective axle A1, A2, ..., An.

The electronic control unit ECU is provided to operate a modulation of the torque applied to each axle according to a predetermined algorithm if, in the case of applying torque during traction or braking in a degraded adhesion condition, the wheels of one or more axles end up in a possible incipient skidding condition. Torque modulation is implemented in such a way as to prevent a total locking of the axles, possibly so as to bring each axle into a condition of controlled slipping with the intention of recovering adhesion and in any case for the entire duration of the degraded adhesion condition.

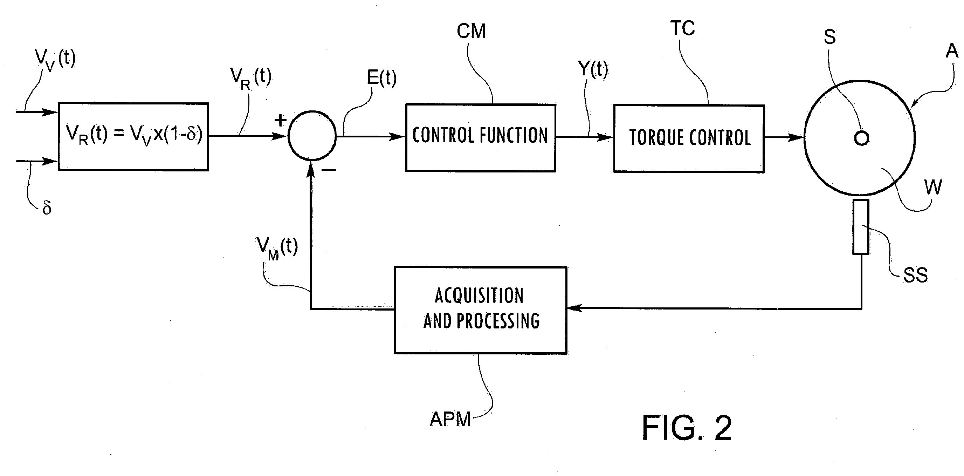

Figure 2 shows a block diagram illustrating an adhesion control/recovery system for a generic axle: the error or difference E(t) between the reference speed value $V_R$(t) at which one wishes to slide the controlled axle A and the measured speed $V_M$(t) detected by the associated sensor SS and conditioned by an acquisition and processing module APM is applied as an input signal to a control module CM, which outputs a drive signal Y(t) to the torque control apparatus TC associated with the axle A.

The reference speed $V_R$(t) is obtained as a fraction of the instantaneous speed of the vehicle, for example, according to the expression:

$$V_s(t) = V_v(t) \cdot (1 - \delta) \qquad (1)$$

where $V_V$(t) is the instantaneous (computed) speed of the vehicle, and $\delta$ represents the related slip of the axle A to be obtained during the skidding phase.

It is evident how the knowledge of the vehicle's instantaneous speed $V_V$(t) is essential for properly controlling skidding.

In the event of braking, the algorithm most used for the estimation of the vehicle's actual speed $V_V$(t) normally uses a function of the type:

$$V_v(T_j) = \max[S_1(T_j), .., S_n(T_j), (V_v(T_{j-1}) + a_{max} \cdot T)] \quad (2)$$

while in the event of traction, the following function is used:

$$V_v(T_j) = \min[S_1(T_j), .., S_n(T_j), (V_v(T_{j-1}) + a_{max} \cdot T) \quad (3)$$

where $a_{max}$ is the maximum acceleration permitted for the vehicle in operation, this acceleration having a positive sign in the case of a traction condition and a negative sign in the case of a braking condition.

The contribution ($V_v(T_{j-1}) + a_{max} \cdot T$) in the relationships (2), (3) serves to contain the variation of the $V_V$(t) within physical limits allowed by the train, when excessive instantaneous and concurrent variations of the speeds of the axles due to particularly degraded adhesion conditions, in traction or braking conditions, could lead to a loss of significance of the speed $V_V$(t) computed with these relationships (2), (3).

More accurate variants of the relationships (2), (3) are known but still based on the instantaneous measurement of the individual speed of the axles. It becomes evident here how the availability of a "dead" axle would make (2), (3) extremely accurate if all the axles were subjected to torque during skidding phase.

By way of non-limiting example, one possible embodiment of a torque control apparatus TC of the torque applied to an axle is described and illustrated in the previous Italian patent application No. 102015000086465 filed December 22, 2015.

A torque control apparatus may be made according to many variants known to persons skilled in the art.

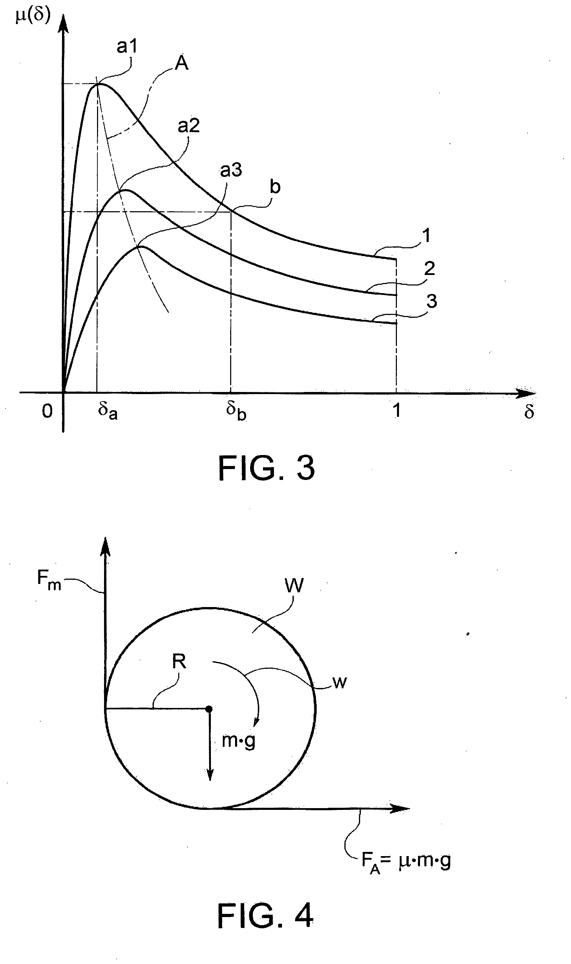

As is well known, the adhesion coefficient $\mu(\delta)$ between wheels and rails varies according to the slip $\delta$ substantially in the way illustrated in figure 3. Based on the expression (1) above, $\delta$ may be expressed as

$$\delta = \frac{Vv - Vr}{Vv} \quad (4)$$

with $0 \leq V_r \leq V_v$ and $0 \leq \delta \leq 1$.

In figure 3, the curves 1, 2 and 3 qualitatively represent the trend of the adhesion according to the environmental conditions: curve 1 corresponds to an adhesion condition in dry contact conditions between the wheels and rails, curve 2 corresponds to an adhesion condition in the presence of moisture between the wheels and rails, and curve 3 represents an adhesion condition in the presence of viscous material between the wheels and rails, such as oil or rotten leaves (typical condition in the autumn period), or even rust mixed with moisture (typical condition in railway depots).

It has been found experimentally that the values of $\delta$ at the adhesion peaks $a_1$, $a_2$, $a_3$ vary with the change in the adhesion conditions, which move along a curve as indicated at A in figure 3.

Experimental measurements demonstrate how the curve A lies in an area corresponding to values $0 \leq \delta \leq 0.02$ even in very degraded adhesion conditions.

If one or more axles, for example the one previously defined as the "dead" axle, can be maintained on the curve A during traction or braking, it is achieved the dual effect of using, for said axles, the maximum available adhesion and at the same time tracking the actual speed of the train, corresponding to $\delta$=0, with a maximum error of 2%.

Figure 4 is a diagram illustrating forces applied to an axle's wheel A. From this figure, it is clear that:

$$F_m \cdot R = F_A \cdot R - J \cdot \dot{\omega} \qquad (5)$$

where:

$$F_A = \mu \cdot m \cdot g \qquad (6)$$

for which:

$$F_m = \mu \cdot m \cdot g - J/R \cdot \dot{\omega} \quad (7)$$

where $F_m$ is the tangential force applied to a wheel by the traction and/or braking system, R is the radius of the wheel, J is the moment of inertia of the axle, m is the mass applied to the wheel-rail contact area, and $\dot{\omega}$ is the instantaneous angular acceleration of the axle.

It is clear that at the same instantaneous angular acceleration, the maximum applicable force $F_m$ is obtained in correspondence with the maximum value of adhesion $\mu$, i.e. at the points lying on the curve A of figure 3.

The method according to the present invention uses an adhesion observer to evaluate in real time the adhesion value $\mu$ at the contact area between the wheels and rails for one or more axles during a skidding phase and, by processing these $\mu$ values in real time, identifies continuously over time the $\delta$ value to be assigned to a slip control system.

An adhesion observer adapted to dynamically identify the instantaneous value $\mu(T_j)$ of the adhesion in a generic sampling period $T_j$ of a predetermined duration T at the wheel-rail contact area during skidding is definable using the equation (7) from which with some simple steps the following relationship is obtained:

$$\mu(T_j) = \frac{1}{m \cdot g} \cdot [F_m(T_j) + J/R \cdot \dot{\omega}(T_j)] \qquad (8)$$

where

$\dot{\omega}$ is the angular acceleration of the axle, i.e. the time derivative of the angular speed co of the axle; the value of this acceleration is already available in real time within a control and adhesion recovery system, because angular acceleration is one of the variables on which the control function implemented by the block CM of figure 2 is normally based for controlling the slip of the axle; the sign of $\dot{\omega}$ depends on the instantaneous acceleration or deceleration condition of the axle;

m is the mass on the wheel-rail contact area; in the latest generation trains, the m value is known in real time, as it is commonly available to the system that computes the accelerating/braking force to apply to the axle to obtain the desired accelerations/decelerations;

J is the moment of inertia of the axle and is a parameter whose value is always known, being supplied by the manufacturer of the carriages, as it is fundamental for the computation of stopping distances;

$F_m$, already defined above in relation to figure 4, can be obtained by multiplying the pressure applied to the brake cylinder, known to the braking system, for pressure/force conversion coefficients typical of the brake cylinder, as well as the transmission and efficiency coefficients of the levers and of the friction coefficient between the brake linings and discs (in the case of disc brakes); in the case of electrodynamic type traction or braking, the value of the force $F_m$ may be obtained from the electric current value supplied/regenerated by the motor in traction or, respectively, in braking; in the case of so-called "blended" braking, the intensity of the force $F_m$ may be determined as the sum of the respective contributions of the pneumatic brake and of the electrodynamic brake, appropriately weighed with respective coefficients; and

$T_j$ is the generic j-th sampling period of the system with which the adhesion observer and more generally the method according to the invention is carried out; in the description that follows, $T_j$ will replace the use of the variable t representing time.

Downstream of the adhesion observer, a low-pass type filter may appropriately be provided, to remove or at least mitigate instantaneous and noise variations present outside of the frequency band useful for a correct observation of the adhesion values.

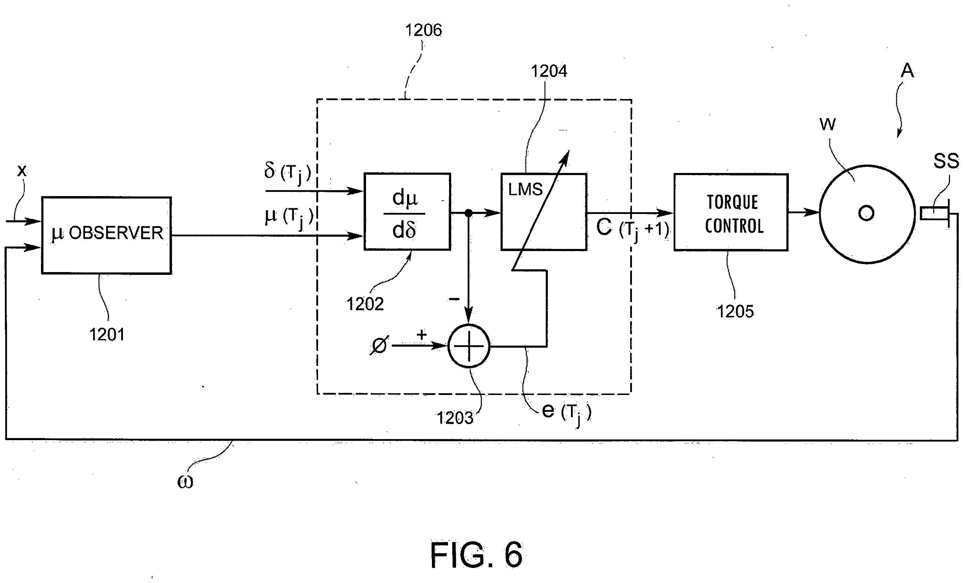

An embodiment of a system for implementing a method according to the present invention is illustrated in figure 6.

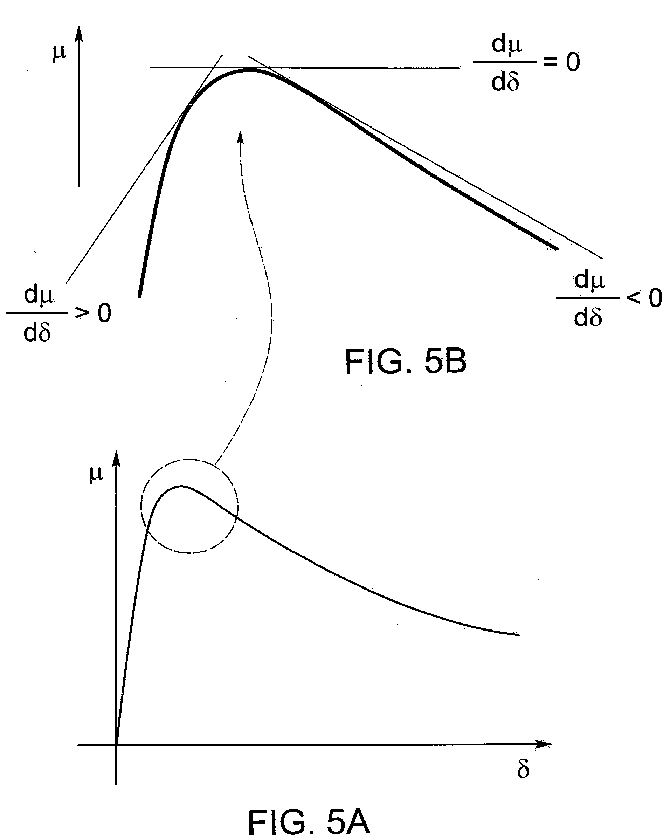

The method provides for identifying and tracking the slip value $\delta$ of at least one axle, such that the curve $\mu(\delta)$ illustrated in figure 5 shows the maximum value, i.e. the $\delta$ value for which $\dfrac{d\mu(T)}{d\delta(T)} = 0.$

For this purpose, a system implementing an LMS algorithm (Least Mean Square) may be used. For an accurate description of the general features of the convergence criteria and the implementation variants of LMS algorithms, please refer to the available literature and in particular to the text: B. Widrow, S. D. Steams, "Adaptive Signal Processing", New Jersey, Prentice-Hall, Inc., 1985.

With reference to Figure 6, an adhesion observer 1201 receives input signals representative of the value of the speed co of the wheel of the controlled axle An that is to be maintained on the adhesion peak, together with an X vector containing the values of the magnitudes $m(T_j)$, J, R and $F_m(T_j)$ previously described, for the estimation of the instantaneous value of adhesion $\mu(T_j)$ relating to the controlled axle.

The output of the adhesion observer 1201 is connected to the input of a module 1202 which computes the value of the derivative $\dfrac{d\mu}{d\delta}$, e.g. according to the equation:

$$\frac{d\mu(T_j)}{d\delta(T_j)} = \frac{\mu(T_j) - \mu(T_{j-1})}{\delta(T_j) - \delta(T_{j-1})} \qquad (9)$$

where the value of $\delta$ is obtained in real time in accordance with the equation (4).

An adder 1203 outputs an error signal $e(T_j)$ as the difference between the desired value of said derivative (i.e. the value 0) and its instantaneous value computed by the module 1202, and such error is used to adapt the LMS algorithm implemented in a block 1204.

The latter provides in output a torque request $C(T_{j+1})$ for said axle, which is transmitted to a torque control module 1205 of a per se known type, having for example the architecture described in the previous aforementioned Italian patent application with reference to figure 3.

In a manner known per se, the module 1204 continuously corrects the output $C(T_{j+1})$ in order to minimize or nullify the error e(T), i.e. in order to obtain a nullification of the aforementioned derivative, i.e. in order to bring and maintain said controlled axle to the adhesion peak value.

By applying, therefore, the solution according to figure 6 to at least one axle, said axle will always advance at a linear speed equal to that of the vehicle (less than a maximum error that can be estimated within 2%), even in degraded adhesion conditions, at the same time providing the maximum force value, in traction or braking, made possible by the available adhesion.

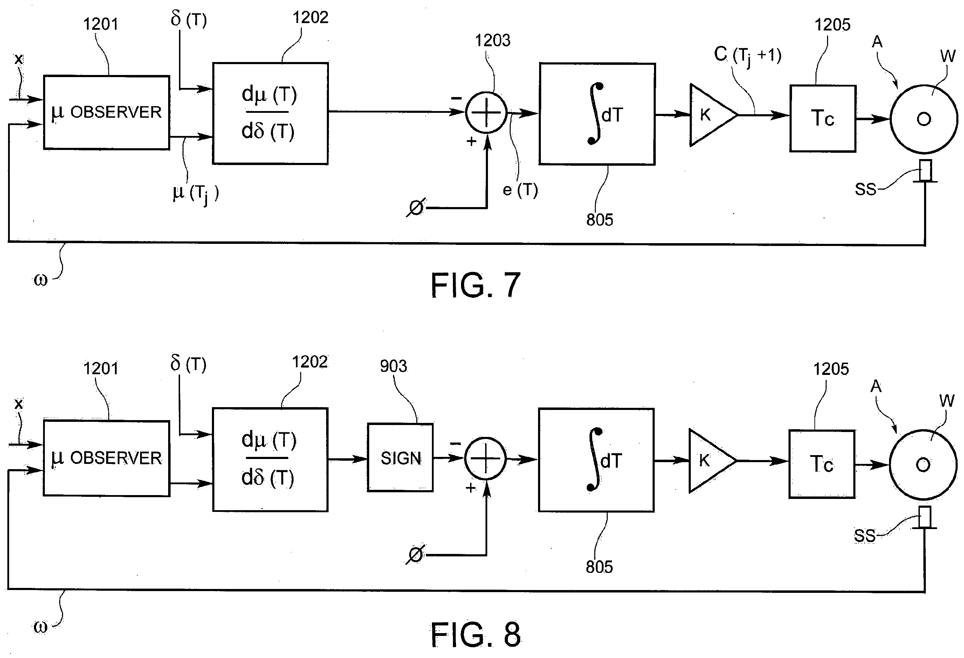

A simplified implementation of the group of modules included in the dashed line block 1206 of figure 6 is illustrated in figure 7, where the block 1204, which implements the LMS algorithm, is replaced with a simple integrator 805, the output of which, amplified with a gain K, generates the torque value $C(T_{j+1})$ to be assigned to the adhesion control and recovery system 1205. In such case, when $\dfrac{d\mu}{d\delta} > 0$ the integrator 805 increases the torque value $C(T_{j+1})$, when $\dfrac{d\mu}{d\delta} < 0$ the integrator 805 decreases the torque value $C(T_{j+1})$, and when $\dfrac{d\mu}{d\delta} = 0$ the integrator 805 keeps the torque value $C(T_{j+1})$ stable.

In this way, the system brings and maintains said controlled axle to the peak adhesion value.

The gain K regulates the identification speed of the average adhesion peak value $\mu$ and simultaneously ensures the stability of the closed loop system.

A further simplified variant of embodiment of the dashed block 1206 of figure 6 is shown in figure 8: the module 903 determines the sign of the derivative $\dfrac{d\mu}{d\delta}$. The output of the block 903 being equal to +1 or -1 (positive and, respectively, negative sign), a subsequent integrator 805 performs simple unitary sums.

The integrator 805 may be replaced with an up/down type counter updated with period $T = T_{j+1} - T_j$.

The diagrams according to figures 7 and 8 perform a continuous tracking of the average adhesion peak $\mu$, continuously adapting to the change in adhesion conditions, similarly to what was achieved with the diagram according to figure 6. The latter allows rapid and accurate tracking of the condition $\frac{d\mu}{d\delta} = 0$, but requires the use of a certain number of computations in real time.

The diagram according to figure 8 greatly reduces the number of computations necessary, but also reduces the tracking speed of the condition $\frac{d\mu}{d\delta} = 0$.

The diagram according to figure 7 has features intermediate between those of the diagrams according to figures 6 and 8.

Therefore, the two expressions (2), (3) provided above always allow a very reliable value of the vehicle's speed $V_V$ to be provided, even in very degraded adhesion conditions.

If it is desired to further increase the accuracy of the tracking of the train's speed, it is sufficient to compute the error with respect to values of $\frac{d\mu}{d\delta} > 0$, i.e. on the left side of the curve illustrated in figure 5B, at the expense of the applied torque value, which will prove to be lower than the maximum peak as a function of the increase of the applied reference value $\frac{d\mu}{d\delta}$.

Naturally, without altering the principle of the invention, the embodiments and the details of implementation may vary widely with respect to those described and illustrated purely by way of non-limiting example, without thereby departing from the scope of the invention as defined in the appended claims.

**Claims**

1. A method for calculating or estimating the speed of a railway vehicle, at least one axle (A) of which has an associated control system (SS, CM, TC, APM) of the adhesion of the wheels (W) to the rails;
the method comprising the steps of
generating speed signals indicating the angular speed ($\omega$) of the wheels (W) of said at least one axle (A);
estimating, as a function of said angular speed ($\omega$), the value of the adhesion ($\mu$) in the contact area of the wheels (W) of said axle (A) and the rails, using an adhesion observer (1201) and calculating the value of the speed slip ($\delta$) of the wheels (W) of said controlled axle (A),
generating signals representative of the derivative $\left(\frac{d\mu}{d\delta}\right)$ of said adhesion ($\mu$) as a function of the slip ($\delta$) of the wheels (W) of said axle (A);
generating a driving signal (C($T_{j+1}$)) for torque control means (1205) controlling the torque applied to the wheels (W) of said axle (A), by means of an adaptive control (1204) of said derivative signals $\left(\frac{d\mu}{d\delta}\right)$ as a function of an error signal (e(($T_{j+1}$)) indicative of the difference between the value of said derivative $\left(\frac{d\mu}{d\delta}\right)$ and a predetermined reference value such as to reduce and keep said difference substantially at zero;
applying said driving signal (C($T_{j+1}$)) to said torque control means (1205) and then computing the vehicle speed as the linear advance speed of said at least one controlled axle (A).

2. A method according to claim 1, wherein said driving signal (C($T_{j+1}$)) is generated by means of an adaptive filtering of LMS type.

3. A method according to claim 1, wherein said driving signal (C($T_{j+1}$)) is generated by the time integration of the derivative $\left(\frac{d\mu}{d\delta}\right)$ of the adhesion ($\mu$) as a function of the slip ($\delta$).

4. A method according to claim 1, wherein said driving signal (C($T_{j+1}$)) is generated by time integration of the sign of

the derivative $\left(\dfrac{d\mu}{d\delta}\right)$ of the adhesion ($\mu$) as a function of the slip ($\delta$).

5. A method according to any of the preceding claims, wherein said reference value $\left(\dfrac{d\mu}{d\delta}\right)$ is equal or greater than zero.

**Patentansprüche**

1. Verfahren zur Berechnung oder Schätzung der Geschwindigkeit eines Schienenfahrzeugs, von dem mindestens eine Achse (A) ein zugehöriges Steuer- bzw. Regelsystem (SS, CM, TC, APM) für die Haftung der Räder (W) an den Schienen aufweist;
   wobei das Verfahren die folgenden Schritte umfasst:

   Erzeugen von Geschwindigkeitssignalen, die die Winkelgeschwindigkeit ($\omega$) der Räder (W) der mindestens einen Achse (A) angeben;
   Schätzen, in Abhängigkeit von der Winkelgeschwindigkeit ($\omega$), des Wertes der Haftung ($\mu$) im Kontaktbereich von den Rädern (W) der Achse (A) und den Schienen unter Verwendung von einem Haftungsüberwacher (1201), und
   Berechnen des Wertes des Drehzahlschlupfs ($\delta$) der Räder (W) der gesteuerten bzw. geregelten Achse (A),
   Erzeugen von Signalen, die die Ableitung $\left(\dfrac{d\mu}{d\delta}\right)$ der Haftung ($\mu$) in Abhängigkeit des Schlupfs ($\delta$) der Räder (W) der Achse (A) darstellen;
   Erzeugen eines Ansteuersignals (C(T$_{j+1}$)) für Drehmoment-Steuer- bzw. Regelmittel (1205), die das auf die Räder (W) der Achse (A) angewendete Drehmoment steuern bzw. regeln, mittels einer adaptiven Steuerung bzw. Regelung (1204) der Ableitungssignale $\left(\dfrac{d\mu}{d\delta}\right)$ in Abhängigkeit von einem Fehlersignal (e((T$_{j+1}$)), das die Differenz zwischen dem Wert der Ableitung $\left(\dfrac{d\mu}{d\delta}\right)$ und einem vorgegebenen Referenzwert angibt, sodass die Differenz im Wesentlichen auf Null reduziert und gehalten wird;
   Anwenden des Antriebssignals (C(T$_{j+1}$)) auf die Drehmoment-Steuer- bzw. Regelmittel (1205), und anschließend Berechnen der Fahrzeuggeschwindigkeit als die lineare Vorrückgeschwindigkeit der mindestens einen gesteuerten bzw. geregelten Achse (A).

2. Verfahren nach Anspruch 1, wobei das Ansteuersignal (C(T$_{j+1}$)) mittels einer adaptiven Filterung vom LMS-Typ erzeugt wird.

3. Verfahren nach Anspruch 1, wobei das Ansteuersignal (C(T$_{j+1}$)) durch die Zeitintegration der Ableitung $\left(\dfrac{d\mu}{d\delta}\right)$ der Haftung ($\mu$) in Abhängigkeit des Schlupfs ($\delta$) erzeugt wird.

4. Verfahren nach Anspruch 1, wobei das Ansteuersignal (C(T$_{j+1}$)) durch Zeitintegration des Vorzeichens der Ableitung $\left(\dfrac{d\mu}{d\delta}\right)$ der Haftung ($\mu$) in Abhängigkeit des Schlupfs ($\delta$) erzeugt wird.

5. Verfahren nach einem beliebigen der vorhergehenden Ansprüche, wobei der Referenzwert $\left(\dfrac{d\mu}{d\delta}\right)$ gleich oder größer als Null ist.

**Revendications**

1. Procédé de calcul ou d'estimation de la vitesse d'un véhicule ferroviaire, dont au moins un essieu (A) comporte un système de contrôle associé (SS, CM, TC, APM) de l'adhérence des roues (W) aux rails ;
   le procédé comprenant les étapes consistant à
   générer des signaux de vitesse indiquant la vitesse angulaire ($\omega$) des roues (W) dudit au moins un essieu (A) ;
   estimer, en fonction de ladite vitesse angulaire ($\omega$), la valeur de l'adhérence ($\mu$) dans la zone de contact des roues (W) dudit essieu (A) et des rails, à l'aide d'un observateur d'adhérence (1201) et calculer la valeur du glissement de vitesse ($\delta$) des roues (W) dudit essieu (A) commandé,

générer des signaux représentatifs de la dérivée $\left(\frac{d\mu}{d\delta}\right)$ de ladite adhérence ($\mu$) en fonction du glissement ($\delta$) des roues (W) dudit essieu (A) ;

générer un signal de pilotage ($C(T_{j+1})$) pour la commande par des moyens de commande de couple (1205) du couple appliqué aux roues (W) dudit essieu (A), au moyen d'une commande adaptative (1204) desdits signaux de

dérivé $\left(\frac{d\mu}{d\delta}\right)$ en fonction d'un signal d'erreur ($e((T_{j+1})$) indicatif de la différence entre la valeur de ladite dérivée

$\left(\frac{d\mu}{d\delta}\right)$ et une valeur de référence prédéterminée de façon à réduire et maintenir ladite différence sensiblement à zéro ;

appliquer ledit signal de pilotage ($C(T_{j+1})$) auxdits moyens de commande de couple (1205), puis calculer informatiquement la vitesse de véhicule en tant que vitesse d'avancée linéaire dudit au moins un essieu (A) commandé.

2. Procédé selon la revendication 1, dans lequel ledit signal de pilotage ($C(T_{j+1})$) est généré au moyen d'un filtrage adaptatif de type LMS.

3. Procédé selon la revendication 1, dans lequel ledit signal de pilotage ($C(T_{j+1})$) est généré par l'intégration temporelle de la dérivée $\left(\frac{d\mu}{d\delta}\right)$ de l'adhérence ($\mu$) en fonction du glissement ($\delta$).

4. Procédé selon la revendication 1, dans lequel ledit signal de pilotage ($C(T_{j+1})$) est généré par l'intégration temporelle du signe de la dérivée $\left(\frac{d\mu}{d\delta}\right)$ de l'adhérence ($\mu$) en fonction du glissement ($\delta$).

5. Procédé selon l'une quelconque des revendications précédentes, dans lequel ladite valeur de référence $\left(\frac{d\mu}{d\delta}\right)$ est égale ou supérieure à zéro.

FIG. 1

FIG. 2

FIG. 3

FIG. 4

$$\frac{d\mu}{d\delta} = 0$$

$$\frac{d\mu}{d\delta} > 0$$

$$\frac{d\mu}{d\delta} < 0$$

FIG. 5B

FIG. 5A

FIG. 6

FIG. 7

FIG. 8

EP 3 439 940 B1

FIG. 9A

FIG. 9B

**EP 3 439 940 B1**

**REFERENCES CITED IN THE DESCRIPTION**

**Patent documents cited in the description**

- EP 0218839 A2

- IT 102015000086465

**Non-patent literature cited in the description**

- **B. WIDROW ; S. D. STEAMS.** Adaptive Signal Processing. Prentice-Hall, Inc, 1985